# FASCICULE DE BREVET EUROPEEN

(11) **EP 2 041 226 B1**
(45) Date de publication et mention de la délivrance du brevet: **02.03.2016**
(21) Numéro de dépôt: 07787673.8
(22) Date de dépôt: 18.07.2007
(51) Int. Cl.: C08L 95/00

(54) **COMPOSITION BITUMINEUSE, SON PROCEDE DE FABRICATION ET SON UTILISATION EN TECHNIQUE ROUTIERE**
BITUMINÖSE ZUSAMMENSETZUNG, HERSTELLUNGSVERFAHREN UND VERWENDUNG DAVON IM STRASSENBAUWESEN
BITUMINOUS COMPOSITION, FABRICATION PROCESS AND USE THEREOF IN ROAD ENGINEERING

(30) Priorité: 19.07.2006 FR 0606555
(43) Date de publication de la demande: 01.04.2009
(73) Titulaire: Eurovia, 92500 Rueil-Malmaison (FR)
(72) Inventeur: UGUET CANAL, Nuria, E-28220 Madrid (ES); HERRERO, Laetitia, 44470 Carquefou (FR); HURTADO AZNAR, Javier, E-28250 Madrid (ES); LESUEUR, Didier, E-28320 Madrid (ES)
(74) Mandataire: Regimbeau
(86) Numéro de dépôt international: PCT/EP2007/057410
(87) Numéro de publication internationale: WO 2008/009694

(56) Documents cités:
- GB-A- 2 295 972
- US-A- 5 518 538
- US-A- 5 556 574
- NUNEZ G A ET AL: "Rheological behavior of concentrated bitumen in water emulsions" LANGMUIR; LANGMUIR AUG 2000 ACS, WASHINGTON, DC, USA, vol. 16, no. 16, août 2000 (2000-08), pages 6497-6502, XP002410020

## Description

L'invention concerne une composition bitumineuse aqueuse utilisable en technique routière, son moyen de fabrication et son utilisation en technique routière. La composition est obtenue en dispersant une émulsion primaire de bitume, caractérisée en ce que sa taille de particule est inférieure à 2 µm dans la phase aqueuse servant à la fabrication d'une émulsion secondaire de bitume, caractérisée en ce que sa taille de particule est supérieure à 2 µm ce qui permet d'obtenir une émulsion finale de bitume contenant jusqu'à 95 % de bitume, caractérisée par une faible viscosité permettant son emploi avec les procédés actuels de mise en oeuvre et de transport des émulsions routières de bitume.

Pour une meilleure compréhension de l'invention, il apparaît utile de donner les définitions suivantes :
- par bitume on entend un bitume routier ou toute composition à base de bitume contenant éventuellement un ou plusieurs acide ou base et/ou un ou plusieurs émulsifiants et/ou un ou plusieurs viscosifiants et/ou un ou plusieurs fluxants et/ou un ou plusieurs plastifiants et/ou tout autre additif permettant d'ajuster les propriétés de la composition, à l'exception des additifs polymériques. Les bitumes routiers sont des bitumes dits naturels, issus du pétrole brut, des schistes bitumineux, d'huiles lourdes, de sables bitumineux, etc., et obtenus notamment par distillation et désasphaltage de la fraction lourde issue de la distillation. Les spécifications pour bitumes routiers sont décrites dans la norme NF EN 12591, "Spécifications des bitumes routiers", mais aussi dans le projet de normes prNF EN 13924 "Spécifications des bitumes routiers durs". On entend également les bitumes modifiés par un polymère, c'est-à-dire les bitumes contenant au moins un polymère et plus généralement toute composition à base de bitume contenant au moins un ou plusieurs polymère et/ou un ou plusieurs acide ou base et/ou un ou plusieurs émulsifiants et/ou un ou plusieurs viscosifiants et/ou un ou plusieurs fluxants d'origine pétrolière, houillère, végétale, animale ou autre et/ou un ou plusieurs plastifiants et/ou tout autre additif permettant d'ajuster les propriétés de la composition. Les spécifications pour bitumes modifiés sont décrites dans le projet de norme prEN 14023, "Spécifications des bitumes modifiés par des polymères". Enfin et par extension, on entend également les substituts de bitume appelés « liants synthétiques » ou « liants clairs », qui sont des produits non-bitumineux visant à reproduire les propriétés, notamment mécaniques et adhésives, des bitumes à l'exception de leur couleur noir, permettant ainsi de réaliser des matériaux de chaussées non-noirs, éventuellement colorables par introduction d'un pigment et/ou en choisissant des granulats colorés ;
- par polymère, on entend les polymères naturels ou synthétiques. Il s'agit par exemple d'un polymère de la famille des élastomères, synthétiques ou naturels, et de manière indicative et non limitative, les copolymères statistiques, multiséquencés ou en étoile, de styrène et de butadiène en toutes proportions ou les copolymères de même famille chimique (isoprène, caoutchouc naturel, ...), éventuellement réticulés in-situ, les copolymères d'acétate de vinyle et d'éthylène en toutes proportions ou de la même famille (acrylate de butyle, de méthyle,... et les polyoléfines). Ce peut être des polymères de récupération, issus par exemple des poudrettes de caoutchouc obtenues de pneus usagés, des déchets divers (câbles, emballage, agricoles, ...) ou encore tout autre polymère couramment utilisé pour la modification des bitumes tels que ceux cités dans le Guide Technique écrit par l'Association Internationale de la Route (AIPCR) et édité par le Laboratoire Central des Ponts et Chaussées "Use of Modified Bituminous Binders, Special Bitumens and Bitumens with Additives in Road Pavements" (Paris, LCPC, 1999), ainsi que tout mélange en toute proportion de ces polymères ;
- par acide, on entend par exemple, l'acide phosphorique et ses dérivés, sels et esters, l'acide chlorhydrique, l'acide sulfurique, l'acide acétique et tout acide ou combinaison d'acide,
- par charge minérale ou organique, on entend par exemple les argiles, les fines minérales, le ciment, la chaux, la silice, le noir de carbone, les fibres minérales, métalliques ou organiques, en particulier les fibres textiles ;
- par émulsion de bitume, on entend une dispersion aqueuse de bitume contenant éventuellement un ou plusieurs additifs et/ou un ou plusieurs émulsifiants et/ou un ou plusieurs viscosifiants et/ou un ou plusieurs fluxants et/ou un ou plusieurs plastifiants et/ou tout autre additif permettant d'ajuster les propriétés de l'émulsion. L'émulsifiant peut être un tensioactif et/ou un solide et/ou un mélange en toute proportion de ces produits. On définit ici une émulsion comme concentrée si la teneur en bitume est supérieure à 72 % ;
- par enrobé bitumineux, on entend un mélange de granulats triés par taille et d'un bitume comprenant éventuellement un ou plusieurs additif(s), par exemple des fibres organiques ou minérales, des poudrettes de caoutchouc, éventuellement issues du recyclage de pneumatiques usagés, des déchets divers (câbles, polyoléfines, ...) ainsi que leurs mélanges en toutes proportions ;
- par granulats, on entend des granulats d'origine diverses, parmi lesquels les granulats issus de carrières ou de gravières, les produits de recyclage tels que les agrégats provenant du fraisage d'enrobés anciens, les rebuts de fabrication, les matériaux provenant du recyclage de matériaux de construction (bétons de démolition, ...), les laitiers, les schistes, les granulats artificiels de toute origine et provenant par exemple de mâchefers d'incinération des ordures ménagères (MIOM), ainsi que leurs mélanges en toutes proportions. Des spécifications pour ces matériaux sont décrites dans la norme NF EN 13 043 portant sur les "Granulats pour mélanges hydrocarbonés et pour enduits superficiels utilisés dans la construction des chaussées, aérodromes et d'autres zones de circulation" ;
- par enrobés à froid on entend tout mélange obtenu par malaxage d'une émulsion de bitume et de granulats, sec ou non, éventuellement en présence d'eau ajoutée en plus de celle de l'émulsion et de celle naturellement présente dans les granulats, et d'additifs qui peuvent être les mêmes que ceux employés généralement dans les enrobés bitumineux, mais aussi des additifs plus spécifiques visant notamment à réguler la rupture de l'émulsion, comme par exemple des rupteurs qui peuvent être choisis par exemple parmi les acides ou les bases, les additifs minéraux tels que le ciment hydraulique (ciment Portland, pouzzolanes, ciments Sorel,...), la chaux, ou des sels minéraux ainsi que des retardateurs de prise qui peuvent également être des sels minéraux ou des composés organiques comme par exemple des acides, des bases ou des tensioactifs, des agents comme des sels ou leur acide de phosphates, phosphonates et phosphinates et/ou polyphosphates minéraux et/ou organiques. Lesdits enrobés à froid peuvent par exemple être obtenus en mélangeant en diverses proportions une émulsion de bitume et un granulat humide ou sec. Généralement le mélange permet d'obtenir au final entre 0,1 et 30 parties massiques de bitume pour 100 parties de granulat sec (soit 0,1-30 parties pour cent notées ppc) et préférentiellement entre 2 et 15 ppc suivant les applications. Des exemples d'enrobés à froids bien connus de l'homme de l'art sont les enrobés coulés à froid, les coulis bitumineux, les grave-émulsion, les enrobés denses à froids, les enrobés ouverts à froid, le retraitement ou recyclage en place ou en centrale de chaussées anciennes à l'émulsion de bitume ou encore les bétons bitumineux à froid ;
- par enduit superficiel on entend tout mélange visant à obtenir au final une couche superficielle contenant des granulats enchassés dans un bitume en film mince, tel que décrit dans le Guide Technique "Enduits Superficiels d'Usure" publié par le Service d'Études Techniques des Routes et Autoroutes (SETRA) et le Laboratoire Central des Ponts et Chaussées (LCPC) en mai 1995. En particulier, des émulsions de bitume peuvent être employées avantageusement pour ce type d'application.

Les émulsions de bitume comportent généralement entre 50 et 72 % massique de bitume pouvant contenir éventuellement un ou plusieurs additifs et un complément souvent appelé « phase aqueuse » pouvant contenir éventuellement un ou plusieurs émulsifiants et/ou additifs.

Le bitume est présent dans l'émulsion sous formes de fines gouttelettes dont la taille de particule peut être aisément mesurée par différentes techniques expérimentales décrites dans l'ouvrage édité par P. Becher « Encyclopedia of emulsion technology », vol. 1 (Marcel Dekker, New York, 1983), la plus utilisée étant vraisemblablement la diffraction de la lumière mise en oeuvre par des appareils connus sous le nom de « granulomètres laser » et commercialisés par exemple par les sociétés Malvern ou Coulter. La taille des particules est souvent exprimée en terme de diamètre médian en volume, noté d₅₀, qui représente le diamètre pour lequel 50 % (en volume) des particules de l'émulsion ont un diamètre supérieur (ou de manière équivalente, inférieur) à cette valeur.

Les émulsions de bitume sont obtenues par fragmentation du liant bitumineux en présence de la phase aqueuse dans des dispositifs adaptés qui peuvent être continus comme les moulins colloïdaux ou les mélangeurs statiques, ou discontinus comme certains procédés dits par inversion de phase en régime concentré.

La phase aqueuse peut contenir également des additifs, en particulier des émulsifiants, des bases et/ou acides permettant par exemple d'en ajuster le pH, des sels, mais aussi des viscosifiant ou même des émulsions de produits non-bitumineux, comme par exemple des latex naturels ou synthétiques. Dans l'étape de fabrication, le rôle de l'émulsifiant, qui peut être un mélange de différents produits, est de favoriser la formation des gouttes de bitume et de les stabiliser, permettant ainsi la survie de l'émulsion. Bien qu'il ne soit pas toujours strictement nécessaire, certains bitumes pouvant être émulsifiés sans additifs, l'émulsifiant est presque toujours utilisé et est généralement mis dans la phase aqueuse, même s'il peut aussi être apporté, tout ou en partie, dans la phase bitume.

En conséquence, les émulsions de bitume sont généralement caractérisées par le type d'émulsifiant utilisé pour maintenir le bitume en dispersion. On connaît des émulsions cationiques, c'est-à-dire obtenues avec un agent émulsifiant comportant un ou plusieurs groupements ioniques portant une charge électrique positive. Ces émulsifiants nécessitent généralement de travailler en milieu acidifié à des pH pouvant atteindre de manière usuelle et non limitative, des valeurs de 1,5 à 3. Des émulsions anioniques sont également utilisées, et sont obtenues avec un agent émulsifiant comportant un ou plusieurs groupement(s) ionique(s) portant une charge électrique négative. Ceci nécessite généralement de travailler en milieu basique à des pH pouvant atteindre de manière usuelle des valeurs de 10 à 12. Il existe également des émulsions à base d'autres types d'émulsifiants, comme les non-ioniques ou les amphotères, d'emploi peu courant en technique routière. Les émulsifiants non-ioniques ne possèdent pas de groupe ionique et les amphotères possèdent à la fois des groupes cationiques et anioniques selon les conditions. Il est également connu que des particules solides comme les argiles, la silice colloïdale peuvent émulsifier le bitume et sont donc également considéré comme des émulsifiants. La nature et la teneur en émulsifiant permettent de régler la vitesse de rupture de l'émulsion et l'homme de l'art sait formuler des émulsions à vitesse de rupture contrôlée, rapide, lente ou intermédiaire, pour répondre aux applications courantes.

Les émulsions de bitume sont utilisées de manière courante en application routière pour diverses applications où elles sont répandues, soit seules pour obtenir par exemple des couches d'accrochage, des couches d'imprégnation et des réparations ponctuelles (point à temps, joints, colmatage de fissures) soit en présence de granulats pour réaliser des enduits superficiels ou des enrobés dits "à froid". Les applications typiques des émulsions de bitume et les caractéristiques qu'elles imposent à l'émulsion peuvent par exemple être trouvée dans le livre édité par la Section des Fabricants d'Émulsions Routières de Bitume (SFERB) de l''Union des Syndicats de l'Industrie Routière Française (USIRF), « Les Emulsions de Bitume » (SFERB, Paris, 1988).

Dans tous les cas, l'émulsion est un vecteur permettant d'apporter le bitume, qui doit être stable au stockage avant son emploi mais dont on cherche à en obtenir la rupture lorsqu'elle est appliquée. La rupture s'entend ici comme le passage d'un état initial où le bitume est dispersé sous forme de fines gouttelettes dans une phase aqueuses (émulsion) vers un état final où le bitume constitue un film continu pouvant par exemple enrober des granulats. Ainsi, les émulsions de bitume possèdent des spécifications de stabilité au stockage, qui sont décrites par exemple dans la norme française de spécifications pour les émulsions cationiques (NF T 65-011).

Selon la norme Européenne EN 13808 donnant un cadre pour spécifier les émulsions de bitume, les critères de stabilité doivent être donnés selon l'essai EN 12847 « Détermination de la tendance à la décantation des émulsions de bitume », et consistant à mesurer la différence entre les teneurs en eau de la couche supérieure et de la couche inférieure d'un volume prescrit d'échantillon après l'avoir laissé au repos, à température ambiante, pendant une semaine.

L'émulsion étant un vecteur pour apporter le bitume, diminuer les teneurs en eau permet de limiter le volume d'émulsion nécessaire pour apporter la quantité donnée de bitume que requiert l'application visée. Aussi, on cherche généralement à maximiser la teneur en bitume dans l'émulsion de manière à diminuer les coûts de transport. Cela permet en parallèle de réduire la consommation d'eau ce qui représente un intérêt évident dans les zones où l'eau est une ressource à économiser. Enfin, la rupture de l'émulsion procède en partie du départ de l'eau, notamment par évaporation, et, tous autres paramètres constants par ailleurs, une émulsion concentrée pourra donc rompre plus rapidement qu'une émulsion ayant une plus faible teneur en bitume.

Une des propriétés essentielle d'une émulsion de bitume est sa viscosité. Une émulsion trop visqueuse ne peut être manipulée par le matériel actuellement utilisé en technique routière, en particulier les pompes et les buses de répandages. De plus, dans les applications où l'émulsion est utilisée pour fabriquer un enrobé à froid, une émulsion trop visqueuse ne pourrait enrober correctement les granulats. Une émulsion trop fluide n'est pas toujours recherchée non plus car elle crée des risques de coulures lors du répandage ou de l'enrobage, et facilite la sédimentation des gouttes de bitume, limitant la tenue au stockage. Cependant, l'emploi d'émulsions de bitume pour réaliser l'imprégnation d'un support granulaire nécessite une faible viscosité permettant la pénétration de l'émulsion au sein du support. En conséquence, et selon leur domaine d'application envisagé, les émulsions de bitume possèdent des spécifications de viscosité, qui sont décrites par exemple dans la norme française de spécifications pour les émulsions cationiques (NF T 65-011).

Selon la norme Européenne EN 13808 donnant un cadre pour spécifier les émulsions de bitume, les critères de viscosité doivent être données selon l'essai EN 12846 « Détermination du temps d'écoulement des émulsions de bitume à l'aide d'un viscosimètre à écoulement », appelé couramment viscosité STV (pour Standard Tar Viscometer) et consistant à mesurer le temps que met l'émulsion à s'écouler à travers un dispositif normalisé possédant un orifice de 2, 4 ou 10 mm de diamètre, à une température d'essai typiquement de 25, 40 ou 50°C.

Le contrôle de la viscosité de l'émulsion est essentiellement obtenu par la teneur en bitume, même s'il existe des additifs possédant un caractère viscosant, dont le surcoût important limite cependant l'emploi industriel. En effet, il est bien connu de l'homme de l'art qu'une émulsion à faible teneur en bitume possède une viscosité inférieure à celle d'une émulsion à forte teneur en bitume, ce qui est décrit par exemple dans le livre déjà cité « Les Emulsions de Bitume » (SFERB, Paris, 1988).

Pour cette raison, les émulsions de bitume utilisées de nos jours en technique routière ne dépassent pas 72 % en masse de bitume, car la fabrication d'émulsions plus concentrées avec les moyens actuels impliquerait une trop forte viscosité qui ne permettrait pas leur emploi avec le matériel couramment employé dans la profession.

Toutefois, la fabrication d'émulsions concentrées de bitume à plus de 72 % reste possible. Ainsi, le brevet EP 0 162 591 appartenant à BP et Intevep décrit la fabrication par un procédé discontinu d'émulsions ayant entre 70 % et 98 % de bitume. Également, le brevet EP 0 999 890 appartenant au CNRS décrit la fabrication par un procédé discontinu d'émulsions ayant entre 75 % et 95 % de bitume ayant une taille de particule inférieure à 2 µm. Des émulsions concentrées fabriquées selon ces procédés par inversion de phase en régime laminaire, possèdent un comportement pâteux à l'image de la mayonnaise, caractérisé par une forte viscosité apparente, comme il est décrit par exemple dans l'article de G. A. Nuñez, M. Briceño, C. Mata, H. Rivas et D. D. Joseph, « Flow Characteristics of Concentrated Emulsions of Very Viscous Oil in Water », dans le Journal of Rheology (vol. 40, n°3,1996, pp.405-423).

Un moyen de réduire la viscosité de telles émulsions, consiste à les diluer avec une solution aqueuse ne contenant pas de bitume, réduisant ainsi la teneur en bitume et perdant en conséquence l'avantage des fortes teneurs en bitume. Ce procédé de dilution est décrit dans les brevets déjà cités, ainsi que dans le brevet EP 0 994 923 appartenant à Colas qui consiste à diluer une émulsion concentrée fabriquée en continu dans un moulin colloïdal.

En d'autres termes, les procédés existant pour fabriquer des émulsions concentrées de bitume génèrent des émulsions trop visqueuses pour être utilisées telles quelles en technique routière et elles sont donc diluées pour être employées à des teneurs en bitume plus faible, perdant l'avantage de la forte concentration en bitume. L'émulsion concentrée est donc un intermédiaire de fabrication.

Cependant, il est connu que la viscosité d'une émulsion, en particulier de bitume, peut être réduite sans en modifier la teneur en bitume, en jouant sur la présence de plusieurs populations de gouttes ayant des tailles différentes.

Ainsi, le brevet GB 362 577 appartenant à Colas Products Limited, A. G. Terry, L. G. Gabriel et J. F. T. Blott, décrit la fabrication par un procédé discontinu, d'émulsions concentrées de bitume jusqu'à 85 % de bitume, obtenues en émulsifiant dans un réacteur sous forme de goutellettes grossières, par exemple de diamètre 20-30 µm, un bitume au sein d'une émulsion de bitume primaire déjà formée dont le diamètre de goutte est inférieur et vaut environ 2 µm. Ce procédé présente cependant le gros inconvénient d'être discontinu, ce qui nécessite la construction de réacteur de très grande taille si l'on veut obtenir des rendements de fabrication de l'ordre de 20 tonnes par heure qui sont des valeurs habituelles dans la profession. De plus, il nécessite l'ajout progressif de bitume chaud (125°C) dans une émulsion primaire contenant de l'eau, ce qui génère de forts dégagements de vapeur et des surpressions importantes nécessitant des installations spécifiques très exigeantes en termes de sécurité. Également, la vaporisation d'une partie de l'eau rend le contrôle des teneurs en chacun des constituants plus difficile. Enfin, ce procédé génère une population de particules très grossières (20 µm à 30 µm), qui s'avèrent très instables au stockage et génèrent une forte sédimentation de l'émulsion.

GB 2 295 972 décrit un procédé de préparation d'une émulsion anionique de bitume bimodale stable comprenant le mélange d'une première émulsion visqueuse avec une seconde émulsion visqueuse, la taille des gouttes de la première émulsion (D_{S}) étant inférieure à 5 microns, la taille des gouttes de la seconde émulsion (D_{L}) étant inférieure 30 microns le ratio D_{L}/D_{S} étant supérieur ou égal à 4, avec 70 à 90 % du bitume contenu dans les gouttes de taille D_{L}. Les émulsions sont préparées dans des mixeurs statiques en série.

US 5,556,574 décrit une méthode de préparation d'une émulsion bitumineuse bimodale comprenant le mélange d'une première émulsion visqueuse avec une seconde émulsion visqueuse, la taille des gouttes de la première émulsion est comprise entre 10 et 40 microns et la taille des gouttes de la seconde émulsion est inférieure à 5 microns.

US 5,518,538 décrit la préparation d'émulsions bitumineuses cationiques bimodales comprenant plus de 75% de bitume par mélange d'une phase aqueuse comprenant une pré-émulsion bitumeuse avec une phase bitumineuse.

Nunez et al., « Rheological behavior of concentrated bitumen in water emulsions », Langmuir, Vol.16, n°16, pages 6497-6502, décrit la préparation d'émulsions bitumineuses bimodales par mélange de deux émulsions monomodales.

Le brevet US 5 419 852 appartenant à Intevep, S.A., décrit la fabrication par un procédé continu, d'émulsions concentrées de bitume avec une faible viscosité ayant de 70 % à 85 % de bitume, obtenues en mélangeant deux émulsions primaires caractérisées en ce que chaque émulsion possède un diamètre différent, l'une ayant un diamètre D_{L} de 10 µm à 40 µm, et l'autre un diamètre D_{S} inférieur à 5 µm, et telles que D_{L}/D_{S} soit supérieur à 4 et que la proportion massique de gouttes de diamètre D_{L} soit comprise entre 45 % et 85 %. Cependant, ce procédé présente l'inconvénient de nécessiter de fabriquer de manière séparée deux émulsions primaires concentrées de forte viscosité qu'il faut ensuite transporter pour pouvoir les mélanger. Même si le transport et le mélange peuvent être effectués sur une même installation industrielle, les systèmes de pompage nécessaires pour déplacer les émulsions primaires impliquent des changements majeurs dans les installations actuelles telles que des systèmes de pompage sous forte pression nécessitant des installations spécifiques très exigeantes en termes de sécurité.

La présente invention a pour but de résoudre ces problèmes en fabriquant une émulsion de concentrée de bitume réalisable sans difficulté à l'aide des moyens actuellement utilisés pour la fabrication d'émulsion routière de bitume et présentant une bonne stabilité au stockage.

En effet, et de manière surprenante, la Demanderesse a découvert que l'utilisation d'une émulsion primaire cationique de bitume, caractérisée en ce que sa taille de particule est inférieure à 2 µm, dans la phase aqueuse servant à la fabrication d'une émulsion secondaire de bitume, caractérisée en ce que sa taille de particule est supérieure à 2 µm, permet d'obtenir une émulsion cationique finale de bitume contenant jusqu'à 95 % de bitume, caractérisée par une viscosité STV à 40°C avec l'orifice de 4 mm inférieure à 300 secondes et une tendance à la décantation mesurée par l'essai EN 12847 inférieure à 10 %, permettant son emploi avec les procédés actuels de mise en oeuvre, de stockage et de transport des émulsions routières de bitume. Cette émulsion finale peut également être diluée pour en ajuster la teneur en bitume.

Selon une modalité préférentielle de l'invention, la teneur en émulsion primaire est telle que le bitume provenant de l'émulsion primaire soit à une teneur entre 5% et 95 % massique du bitume total, et préférentiellement entre 10% et 40%.

Selon une modalité préférentielle de l'invention, le diamètre médian de l'émulsion primaire est compris entre 0,2 µm et 2 µm exclu et préférentiellement compris entre 0,5 µm et 1,5 µm.

Selon une modalité préférentielle de l'invention, le diamètre médian de l'émulsion secondaire est compris entre 2 µm exclu et 20 µm et préférentiellement compris entre 3 µm et 12 µm.

Selon une modalité préférentielle de l'invention, le diamètre médian de l'émulsion primaire est au moins 2 fois plus petit que celui de l'émulsion secondaire, et préférentiellement au moins 3 fois inférieur.

L'émulsion primaire peut être fabriquée selon tout procédé approprié, continu ou discontinu, notamment un moulin colloïdal, un ou une succession de mélangeurs statiques, par inversion de phase. Des procédés différents peuvent être employés pour chaque émulsion. L'émulsion secondaire est fabriquée dans un moulin colloïdal ou une succession de mélangeurs statiques. Selon une modalité encore plus préférentielle de l'invention, l'émulsion primaire est fabriquée par inversion de phase en régime laminaire tel que décrit dans le brevet EP 0 999 890 et l'émulsion secondaire est fabriquée dans un moulin colloïdal.

L'émulsion primaire peut également être fabriquée par le procédé selon l'invention, de manière à utiliser une émulsion finale selon l'invention comme émulsion primaire d'une nouvelle émulsion selon l'invention.

L'émulsion primaire peut être préalablement diluée, éventuellement à l'aide d'une solution aqueuse contenant des additifs tels que, et de manière non limitative, des émulsifiants, des acides, des bases, des sels, des épaississants. La dilution peut également s'opérer pendant la fabrication de l'émulsion secondaire, par exemple en injectant directement l'émulsion primaire, une solution aqueuse de dilution et le bitume de l'émulsion secondaire au sein d'un émulsionneur.

L'invention concerne aussi les émulsions de bitume obtenues de cette manière, dont les propriétés peuvent être facilement ajustées par un choix judicieux de constituants.

Selon une modalité de l'invention, l'émulsion primaire est réalisée soit avec un bitume différent de celui de l'émulsion secondaire, soit avec un ou plusieurs émulsifiants différents soit une combinaison des deux. Les bitumes peuvent notamment différer par leur grade et/ou leur provenance et/ou la présence d'un ou plusieurs additifs permettant d'en régler les propriétés, tels qu'un ou plusieurs polymères, acide, plastifiant, seul ou en combinaison.

L'émulsion primaire peut être réalisée à partir d'un bitume plus mou que le bitume secondaire, par un choix de grade approprié et/ou par l'emploi d'un plastifiant et/ou un fluxant, de manière à régler la maniabilité et/ou la compactibilité et/ou la qualité d'enrobage et/ou les propriétés mécaniques d'un enrobé à froid utilisant la composition.

L'émulsion primaire peut également être réalisée à partir d'un bitume plus dur que le bitume secondaire, par un choix de grade, approprié et/ou par l'emploi d'un plastifiant et/ou un fluxant, de manière à régler la maniabilité et/ou la compactibilité et/ou la qualité d'enrobage et/ou les propriétés mécaniques d'un enrobé à froid utilisant la composition.

Selon une modalité préférentielle de l'invention, la composition est caractérisée en ce que le bitume de l'émulsion primaire est un bitume modifié par un polymère, obtenu par ajout de 0,5 % à 30 % massiques de polymère issu de la famille des élastomères synthétiques ou naturels, et plus préférentiellement un élastomère choisis parmi les copolymères de styrène et de butadiène éventuellement réticulés in-situ ou des copolymères de l'éthylène et d'acétate de vinyle et/ou d'acrylate de méthyle, ainsi que leurs mélanges,

Les émulsions primaire et secondaire peuvent être réalisées avec des émulsifiants différents, permettant d'ajuster la cinétique de rupture de l'émulsion. En particulier, ils peuvent être choisis pour régler la maniabilité et/ou la compactibilité et/ou la qualité d'enrobage d'un enrobé à froid utilisant la composition. L'émulsifiant de l'émulsion primaire peut également être utilisé pour émulsifier le bitume secondaire, sans ajout d'émulsifiant additionnel.

L'émulsion primaire peut ainsi être réalisée à partir d'un bitume plus mou mais également d'un émulsifiant plus stable que pour l'émulsion secondaire, permettant, lors de son emploi en enrobé à froid, de garder une « réserve » d'émulsion fine molle non rompue permettant la lubrification de l'enrobé lors de sa mise en oeuvre en particulier au compactage, et permettant également de réaliser un enrobage plus homogène.

L'émulsion primaire peut également être réalisée à partir d'un bitume plus dur mais également d'un émulsifiant plus stable que pour l'émulsion secondaire, permettant, lors de son emploi en enrobé à froid, de garder une « réserve » d'émulsion fine dure non rompue permettant d'obtenir des propriétés mécaniques améliorées à long terme (plusieurs semaines).

L'émulsion primaire peut être réalisée à partir d'un bitume plus dur mais également d'un émulsifiant moins stable que pour l'émulsion secondaire, permettant, lors de son emploi en enrobé à froid, d'obtenir un premier film d'émulsion fine dure rompue autour des granulats permettant d'obtenir des propriétés mécaniques améliorées à court terme (quelques heures).

L'émulsion primaire peut être réalisée à partir d'un bitume modifié par un ou plusieurs polymère et l'émulsion secondaire à partir d'un bitume pur, le choix de chacun des émulsifiants étant réalisé de manière à obtenir lors de la rupture une phase continue de bitume modifié au sein de laquelle se trouvent emprisonnées les gouttes de bitume de l'émulsion secondaire, de manière à créer une « armature » élastomérique au sein du film de liant.

L'émulsion primaire et la phase aqueuse de l'émulsion secondaire peuvent contenir de plus tout type d'additif permettant d'en réguler les propriétés parmi lesquels les agents viscosifiants, les régulateurs de prise ou les sels, par exemple, les chlorures de calcium, de potassium, de sodium ou tout autre sel de calcium, potassium, sodium ou magnésium. Le cas où l'additif est une émulsion non-bitumineuse, en particulier une émulsion d'un polymère, par exemple un latex de caoutchouc synthétique, est aussi considéré.

Selon une modalité préférentielle de l'invention la teneur et nature du polymère dans le liant résiduel obtenu après départ de l'eau de la composition, apporte un caractère résistant aux carburants, notamment le kérozène et les essences, permettant par exemple son emploi dans des zones de stationnement aéroportuaire ou des stations services.

L'invention concerne également l'utilisation de ces compositions en particulier en technique routière ou aéroportuaire, pour la fabrication de matériaux pour chaussées neuves, pour le renforcement ou la maintenance de chaussées anciennes ou leur réparation ponctuelle, mais aussi pour les travaux d'étanchéité de toitures, de ponts, etc. ou encore pour des peintures, par exemple, et de manière non limitative, de sols industriels.

Selon une modalité préférentielle de l'invention, la composition entre dans la formulation d'une couche d'accrochage concentrée à rupture rapide, en particulier une couche d'accrochage dite "propre", dont le liant résiduel ne colle pas aux pneus des véhicules de chantier grâce à l'emploi de bitume dur.

Selon une modalité préférentielle de l'invention, la composition entre dans la formulation d'une émulsion d'imprégnation, caractérisée en ce que les petites particules issues de l'émulsion primaire pénètrent dans le support granulaire alors que les grosses particules restent en surface formant une couche protectrice (enduit de cure ou de scellement).

Selon une modalité préférentielle de l'invention, la composition entre dans la formulation d'un enrobé bitumineux, par exemple un enrobé coulé à froid, caractérisé par un caractère résistant aux carburants et/ou par sa grande adhérence grâce à l'emploi de tout ou partie de granulats possédant un bon coefficient de résistance au polissage, tels que la bauxite calcinée et/ou par sa couleur non-noire grâce à l'emploi de liants clairs en combinaison éventuelle avec des pigments et/ou des granulats choisis pour leur couleur.

Selon une modalité préférentielle de l'invention, la composition entre dans la formulation d'un enrobé bitumineux, par exemple un béton bitumineux à froid, dont les propriétés mécaniques lors de la mise en oeuvre et/ou finales, une fois l'émulsion rompue, sont régulées par l'emploi, dans les émulsions primaires et secondaires, d'émulsifiants différents et/ou de bitumes de grades différents et/ou contenant des plastifiants ou fluxants de nature et de teneur différents.

Selon une modalité préférentielle de l'invention, la composition entre dans la formulation d'un enduit superficiel à base d'une émulsion concentrée et à rupture rapide, qui peut éventuellement être caractérisé par sa résistance aux carburants, et/ou sa grande adhérence grâce à l'emploi de tout ou partie de granulats possédant un bon coefficient de résistance au polissage, tels que la bauxite calcinée et/ou par sa couleur non-noire grâce à l'emploi de liants clairs en combinaison éventuelle avec des pigments et/ou des granulats choisis pour leur couleur.

L'émulsion peut également être utilisée partout où les émulsions concentrées de bitume présentent un intérêt, en particulier dans la fabrication d'enrobés parfois appelés semi-tièdes consistant à préchauffer légèrement (moins de 100°C) des granulats avant de les malaxer en présence d'une émulsion de bitume concentrée.

L'intérêt et les modalités pratiques de l'invention sont illustrées, de manière non limitative, par les exemples suivants.

### Exemple comparatif 1 : Préparation d'une émulsion primaire EP0 selon l'art antérieur

Une émulsion primaire EP0 contenant 62 % de bitume Repsol 160/220 et 0,3 % d'émulsifiant diamine grasse Asfier 100 de Kao, obtenue industriellement à l'aide d'un moulin colloïdal dans l'usine Probisa de Santiago de Compostela en Espagne et de taille de particule moyenne 4,18 microns est utilisée.

### Exemple 2 : Préparation d'une émulsion primaire EP1 selon l'invention

Une émulsion primaire EP1 (Tableau 1) est fabriquée par inversion de phase en régime laminaire à partir d'un bitume Nynas de grade 70/100 et d'une phase aqueuse acidifiée à l'acide chlorhydrique en quantité suffisante pour obtenir un à pH de 2,5 et contenant 15 % d'un émulsifiant cationique, une diamine grasse (Dinoram S de Ceca).

10 parties massiques de la phase aqueuse, initialement à 50°C, sont introduites dans 100 parties de bitume à 90°C placés dans un réacteur chauffant avec un système d'agitation à vitesse contrôlable. L'agitation est maintenue à 600 tours/min pendant environ 15 min et l'émulsion concentrée ainsi obtenue est diluée à une teneur en bitume massique de 57 %.

Le diamètre médian de l'émulsion EP1 correspondante, mesuré par un granulomètre laser Mastersizer 2000 de la marque Malvern, est de 0,5 microns.

### Exemple 3 : Préparation d'une émulsion primaire EP2 (pas selon l'invention)

Une émulsion primaire EP2 (Tableau 1) est fabriquée au moulin colloïdal à partir d'un bitume Nynas de grade 70/100 et d'une phase aqueuse contenant 2 % d'un émulsifiant acide gras amido alkyl bétaïne (AGAAB) fourni par Goldschmidt, et une quantité suffisante de soude pour obtenir un pH de 12,5. 40 parties massiques de la phase aqueuse, initialement à 25°C, sont introduites dans 60 parties de bitume à 140°C au sein d'un moulin colloïdal de laboratoire Emulbitume.

Le diamètre médian de l'émulsion EP2 correspondante, mesurée au granulomètre laser Mastersizer 2000, est de 0,8 microns.

### Exemple 4 : Préparation d'une émulsion primaire EP3 selon l'invention

Une émulsion primaire EP3 (Tableau 1) est fabriquée par inversion de phase en régime laminaire à partir d'un bitume modifié industriel Styrelf 24/60, fabriqué par Eurovia dans l'usine de Périgueux, contenant 5 % de copolymère séquencé styrène-butadiène réticulé in-situ et d'une phase aqueuse acidifiée à l'acide chlorhydrique en quantité suffisante pour obtenir un pH de 2,5, et contenant 20 % d'un émulsifiant cationique, une diamine grasse (Dinoram S de Ceca).

10 parties massiques de la phase aqueuse, initialement à 50°C, sont introduites dans 100 parties de bitume à 90°C placés dans un réacteur chauffant avec un système d'agitation à vitesse contrôlable. L'agitation est maintenue à 600 tours/min pendant environ 15 min et l'émulsion concentrée ainsi obtenue est diluée à une teneur en bitume finale massique de 61 %.

Le diamètre médian de l'émulsion EP3 correspondante, mesuré au granulomètre laser Mastersizer 2000, est de 0,7 microns.

### Exemple comparatif 5 : Préparation d'une émulsion finale EF0 selon l'art antérieur

25 parties massiques de l'émulsion primaire EP0 sont ajoutées à 75 parties d'un bitume Nynas 160/220 initialement à 90°C dans un réacteur chauffant avec un système d'agitation à vitesse contrôlable. L'agitation est maintenue proche de 200 tours/min pendant environ 3 min et l'émulsion concentrée ainsi obtenue est diluée par 20 parties d'eau pour obtenir une teneur en bitume finale massique nominale de 75 %.

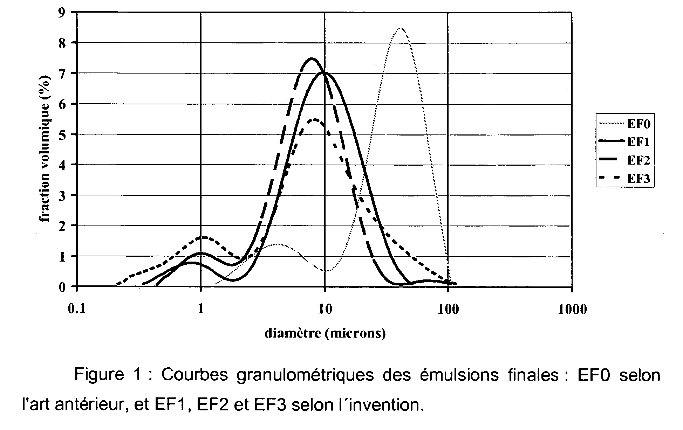

L'émulsion EF0 correspondante (Tableau 2) possède une granulométrie clairement bimodale (Figure 1). Sa teneur en bitume mesurée est de 73 %, dont 17 % du total est présent sous forme d'émulsion primaire, par formulation. Par fabrication, l'émulsifiant utilisé dans l'émulsion primaire (diamine grasse) est également celui utilisé dans l'émulsion secondaire. La viscosité STV à 40°C par l'orifice de 4 mm de l'émulsion EF0 est de 14 s et la tendance à la décantation (stabilité au stockage) de 18 % (Tableau 3).

### Exemple 6 : Préparation d'une émulsion finale EF1 selon l'invention

0,25 parties massiques d'un émulsifiant cationique, une polyamine grasse (Polyram S de Ceca) sont mélangées à 16,75 parties d'eau acidifiée à l'acide chlorhydrique en quantité suffisante pour obtenir un pH final de 2,5. 15 parties de l'émulsion primaire EP1 sont mélangées à cette préparation pour constituer 32 parties de phase aqueuse de l'émulsion secondaire.

Les 32 parties massiques de cette phase aqueuse, initialement à 25°C, sont introduites dans 68 parties d'un bitume Nynas 70/100 à 140°C au sein du moulin colloïdal Emulbitume.

L'émulsion EF1 correspondante (Tableau 2) possède une granulométrie clairement bimodale (Figure 1). Sa teneur en bitume est de 77 %, dont 11 % du total est présent sous forme d'émulsion primaire, par formulation. Par fabrication, l'émulsifiant utilisé dans l'émulsion primaire (diamine grasse) est différent de celui utilisé dans l'émulsion secondaire (polyamine grasse). La viscosité STV à 40°C par l'orifice de 4 mm de l'émulsion EF1 est de 38 s et la tendance à la décantation (stabilité au stockage) de 2 % (Tableau 3).

### Exemple 7 : Préparation d'une émulsion finale EF2 (pas selon l'invention)

2 parties massiques de l'émulsifiant AGAAB déjà utilisé pour l'émulsion EP2, sont mélangées à 16 parties d'eau rendue basique par ajout de soude en quantité suffisante pour obtenir un pH final de 12,5. 15 parties de l'émulsion primaire EP2 sont mélangées à cette préparation pour constituer 33 parties de phase aqueuse de l'émulsion secondaire.

Les 33 parties massiques de cette phase aqueuse, initialement à 25°C, sont introduites dans 67 parties d'un bitume BP 80/100 à 140°C au sein du moulin colloïdal Emulbitume.

L'émulsion EF2 correspondante (Tableau 2) possède une granulométrie clairement bimodale (Figure 1). Sa teneur en bitume est de 76 %, dont 12 % du total est présent sous forme d'émulsion primaire, par formulation. La viscosité STV à 40°C par l'orifice de 4 mm de l'émulsion EF2 est de 26 s et la tendance à la décantation (stabilité au stockage) de 3 % (Tableau 3).

### Exemple 8 : Préparation d'une émulsion finale EF3 selon l'invention

5 parties d'eau acidifiée à l'acide chlorhydrique en quantité suffisante pour obtenir un pH final de 2,5 sont ajoutées à 25 parties de l'émulsion primaire EP3 pour constituer 30 parties de phase aqueuse de l'émulsion secondaire.

Les 30 parties massiques de cette phase aqueuse, initialement à 25°C, sont introduite dans 70 parties d'un bitume Total 160/220 à 140°C au sein du moulin colloïdal Emulbitume.

L'émulsion EF3 correspondante (Tableau 2) possède une granulométrie clairement bimodale (Figure 1). Sa teneur en bitume est de 85 %, dont 18 % du total est présent sous forme d'émulsion primaire, par formulation. Par fabrication, le bitume utilisé dans l'émulsion primaire est modifié par un polymère alors que celui utilisé dans l'émulsion secondaire est non-modifié. De plus, leurs grades sont différents. La viscosité STV à 40°C par l'orifice de 4 mm de l'émulsion EF3 est de 180 s et la tendance à la décantation (stabilité au stockage) de 1 % (Tableau 3).

**Tableau 1 : Composition des émulsions primaires (les pourcentages massiques sont donnés par rapport à l'émulsion).**

| | | EP0 | EP1 | EP2 | EP3 |
|---|---|---|---|---|---|
| procédé | | Selon l'art antérieur moulin colloïdal | Selon l'invention IPRL | Pas selon l'invention moulin colloïdal | Selon l'invention IPRL |
| bitume | nature | Repsol 160/220 | Nynas 70/100 | Nynas 70/100 | Styrelf 24/60 |
| bitume | % | 62 | 57 | 60 | 61 |
| émulsifiant | nature | Diamine | Diamine | AGAAB | Diamine |
| émulsifiant | % | 0.3 | 0.9 | 2.0 | 1.2 |
| pH | - | 2.5 | 2.5 | 12.5 | 2.5 |

**Tableau 2 : Composition des émulsions finales selon l'invention (les pourcentages massiques sont donnés par rapport à l'émulsion finale).**

| | | EF0 | EF1 | EF2 | EF3 |
|---|---|---|---|---|---|
| | | Selon l'art antérieur | Selon l'invention | Pas selon l'invention | Selon l'invention |
| procédé | | IPRL | moulin colloïdal | moulin colloïdal | moulin colloïdal |
| émulsion primaire | nature | EP0 | EP1 | EP2 | EP3 |
| teneur | % | 25 | 15 | 15 | 25 |
| émulsifiant secondaire | nature | - | Polyamine | AGAAB | - |
| teneur | % | - | 0.25 | 2 | - |
| complément eau | % | 20 | 16.75 | 16 | 5 |
| pH | - | 2.5 | 2.5 | 12.5 | 2.5 |
| soit phase aqueuse | % | 37.5 | 32 | 33 | 30 |
| bitume secondaire | nature | Nynas 160/220 | Nynas 70/100 | BP 80/100 | Total 160/220 |
| bitume secondaire | % | 62.5 | 68 | 67 | 70 |

**Tableau 3 : Propriétés des émulsions finales selon l'invention.**

| | | EF0 | EF1 | EF2 | EF3 |
|---|---|---|---|---|---|
| | | Selon l'art antérieur | Selon l'invention | Pas selon l'invention | Selon l'invention |
| bitume total | % | 73 | 77 | 76 | 85 |
| dont bitume primaire | % | 17 | 12 | 11 | 18 |
| d50 primaire | microns | 4.2 | 0.5 | 0.8 | 0.7 |
| d50 secondaire | microns | 40.2 | 9.3 | 8.2 | 8.0 |
| d50 secondaire/d50 primaire | - | 10 | 19 | 10 | 11 |
| viscosité STV 4 mm 40°C | S | 14 | 38 | 26 | 180 |
| stabilité au stockage | % | 18 | 2 | 3 | 1 |

## Revendications

1. Procédé de fabrication d'une émulsion bitumineuse cationique consistant à utiliser une émulsion primaire cationique de bitume, éventuellement diluée, **caractérisée par** un diamètre médian, mesuré par diffraction de la lumière au moyen d'un granulomètre laser, inférieur à 2 µm, comme la phase aqueuse d'une émulsion secondaire de bitume, **caractérisée par** un diamètre médian, mesuré par diffraction de la lumière au moyen d'un granulomètre laser, supérieur à 2 µm, l'émulsion finale ainsi obtenue étant **caractérisée par** une teneur en bitume de 50 % à 95 % massique, une viscosité STV (Standard Tar Viscometer), mesurée par l'essai EN 12846, à 40°C par l'orifice de 4 mm inférieure à 300 s et une tendance à la décantation mesurée par l'essai EN 12847 inférieure à 10 %, ledit procédé étant **caractérisé en ce que** l'émulsion secondaire est fabriquée dans un moulin colloïdal ou une succession de mélangeurs statiques.

2. Procédé selon la revendication 1 **caractérisé en ce que** le rapport du diamètre médian de l'émulsion secondaire à celui de l'émulsion primaire est supérieur à 2.

3. Procédé selon l'une ou l'autre des revendications 1 à 2 **caractérisé en ce que** le diamètre médian de l'émulsion primaire est compris entre 0,2 µm et 2 µm exclu.

4. Procédé selon l'une ou l'autre des revendications 1 à 3 **caractérisé en ce que** le diamètre médian de l'émulsion secondaire est compris entre 2 µm exclu et 20 µm.

5. Procédé selon l'une ou l'autre des revendications 1 à 4 **caractérisé en ce que** la teneur en bitume issu de l'émulsion primaire est comprise entre 5% et 95 %.

6. Procédé selon l'une ou l'autre des revendications 1 à 5 **caractérisé en ce que** l'émulsion primaire est obtenue par inversion de phase en régime laminaire et l'émulsion secondaire est obtenue par un moulin colloïdal.

7. Procédé selon l'une ou l'autre des revendications 1 à 6 **caractérisé en ce que** le bitume utilisé dans l'émulsion primaire diffère par le grade, la provenance et/ou la présence d'additifs de celui utilisé dans l'émulsion secondaire.

8. Procédé selon l'une ou l'autre des revendications 1 à 7, **caractérisé en ce que** le bitume constituant l'émulsion primaire est un bitume modifié par un polymère et celui de l'émulsion secondaire ne contient pas de polymère.

9. Procédé selon la revendication 8, **caractérisé en ce que** le bitume modifié par un polymère constituant l'émulsion primaire est obtenue par ajout de 0,5 % à 30 % par rapport au bitume d'élastomères choisis parmi les copolymères séquencés ou statistiques de styrène et de butadiène, éventuellement réticulés in-situ, ou des copolymères de l'éthylène et d'acétate de vinyle ou d'un acrylate de méthyle ou de butyle, ainsi que leurs mélanges.

10. Procédé selon l'une ou l'autre des revendications 1 à 9, **caractérisé en ce que** le ou les émulsifiant(s) utilisé(s) pour fabriquer l'émulsion primaire est (sont) utilisé(s) sans apport additionnel d'émulsifiant pour fabriquer l'émulsion secondaire.

11. Procédé selon l'une ou l'autre des revendications 1 à 9, **caractérisé en ce que** le ou les émulsifiant(s) utilisé(s) pour fabriquer l'émulsion primaire est (sont) différent(s) de celui (ou ceux) employés pour fabriquer l'émulsion secondaire.

12. Procédé selon la revendication 1 **caractérisé en ce que** le rapport du diamètre médian de l'émulsion secondaire à celui de l'émulsion primaire est supérieur à supérieur à 3.

13. Procédé selon l'une ou l'autre des revendications 1 à 2 **caractérisé en ce que** le diamètre médian de l'émulsion primaire est compris entre 0,5 µm et 1,5 µm.

14. Procédé selon l'une ou l'autre des revendications 1 à 3 **caractérisé en ce que** le diamètre médian de l'émulsion secondaire est compris entre 3 µm et 12 µm.

15. Procédé selon l'une ou l'autre des revendications 1 à 4 **caractérisé en ce que** la teneur en bitume issu de l'émulsion primaire est comprise entre 10 % et 40 % du bitume total.

## Patentansprüche

1. Verfahren zur Herstellung einer kationischen Bitumenemulsion, das darin besteht, eine, gegebenenfalls verdünnte, primäre kationische Bitumenemulsion, die durch einen durch Lichtbeugung mittels eines Laser-Korngrößenbestimmungsgeräts gemessenen durchschnittlichen Durchmesser gekennzeichnet ist, der kleiner als 2 µm ist, als die wässrige Phase einer sekundären Bitumenemulsion zu verwenden, die durch einen durch Lichtbeugung mittels eines Laser-Korngrößenbestimmungsgeräts gemessenen durchschnittlichen Durchmesser gekennzeichnet ist, der größer als 2 µm ist, wobei die so erhaltene Endemulsion durch einen Bitumengehalt von 50 Ma% bis 95 Ma%, eine durch die Prüfung EN 12846 bei 40 °C durch die Öffnung von 4 mm gemessene STV-Viskosität (STV = Standard Tar Viscometer) von unter 300 s und ein durch die Prüfung EN 12847 gemessenes Absetzverhalten von unter 10 % gekennzeichnet ist, wobei das Verfahren **dadurch gekennzeichnet ist, dass** die Sekundäremulsion in einer Kolloidmühle oder einer Folge von statischen Mischern hergestellt wird.

2. Verfahren nach Anspruch 1, **dadurch gekennzeichnet, dass** das Verhältnis des durchschnittlichen Durchmessers der Sekundäremulsion zu demjenigen der Primäremulsion größer als 2 ist.

3. Verfahren nach einem der der Ansprüche 1 bis 2, **dadurch gekennzeichnet, dass** der durchschnittliche Durchmesser der Primäremulsion zwischen 0,2 µm und 2 µm (ausgeklammert) enthalten ist.

4. Verfahren nach einem der Ansprüche 1 bis 3, **dadurch gekennzeichnet, dass** der durchschnittliche Durchmesser der Sekundäremulsion zwischen 2 µm (ausgeklammert) und 20 µm enthalten ist.

5. Verfahren nach einem der Ansprüche 1 bis 4, **dadurch gekennzeichnet, dass** der Bitumengehalt, der aus der Primäremulsion stammt, zwischen 5 % und 95 % enthalten ist.

6. Verfahren nach einem der Ansprüche 1 bis 5, **dadurch gekennzeichnet, dass** die Primäremulsion durch Phasenumkehrung im laminaren Bereich erhalten wird und die Sekundäremulsion durch eine Kolloidmühle erhalten wird.

7. Verfahren nach einem der Ansprüche 1 bis 6, **dadurch gekennzeichnet, dass** das in der Primäremulsion verwendete Bitumen sich durch den Grad, die Herkunft und/oder das Vorhandensein von Zusatzstoffen von demjenigen unterscheidet, der in der Sekundäremulsion verwendet wird.

8. Verfahren nach einem der Ansprüche 1 bis 7, **dadurch gekennzeichnet, dass** das Bitumen, das die Primäremulsion bildet, ein durch ein Polymer modifiziertes Bitumen ist, und dasjenige der Sekundäremulsion kein Polymer enthält.

9. Verfahren nach Anspruch 8, **dadurch gekennzeichnet, dass** das durch ein Polymer modifizierte Bitumen, das die Primäremulsion bildet, durch Zusatz von 0,5 % bis 30 % Elastomeren, die unter statischen oder Blockcopolymeren von Styrol und Butadien, die gegebenenfalls in situ vernetzt werden, oder Ethylen-und Vinylacetat-Copolymeren oder einem Methyl- oder Butylacrylat sowie ihrer Mischungen ausgewählt werden, im Verhältnis zum Bitumen erhalten wird.

10. Verfahren nach einem der Ansprüche 1 bis 9, **dadurch gekennzeichnet, dass** der oder die für die Herstellung der Primäremulsion verwendete/n Emulgator/en ohne zusätzlichen Zusatz von Emulgatoren zur Herstellung der Sekundäremulsion verwendet wird/werden.

11. Verfahren nach einem der Ansprüche 1 bis 9, **dadurch gekennzeichnet, dass** der/die für die Herstellung der Primäremulsion verwendete Emulgator/en sich von dem- oder denjenigen unterscheidet, der/die für die Herstellung der Sekundäremulsion eingesetzt wird/werden.

12. Verfahren nach Anspruch 1, **dadurch gekennzeichnet, dass** das Verhältnis des durchschnittlichen Durchmessers der Sekundäremulsion zu demjenigen der Primäremulsion größer als 3 ist.

13. Verfahren nach einem der Ansprüche 1 bis 2, **dadurch gekennzeichnet, dass** der durchschnittliche Durchmesser der Primäremulsion zwischen 0,5 µm und 1,5 µm enthalten ist.

14. Verfahren nach einem der Ansprüche 1 bis 3, **dadurch gekennzeichnet, dass** der durchschnittliche Durchmesser der Sekundäremulsion zwischen 3 µm und 12 µm enthalten ist.

15. Verfahren nach einem der Ansprüche 1 bis 4, **dadurch gekennzeichnet, dass** der Bitumengehalt, der von der Primäremulsion stammt, zwischen 10 % und 40 % der Gesamtbitumen enthalten ist.

## Claims

1. A method for making a cationic bituminous emulsion consisting of using an optionally diluted, primary cationic bitumen emulsion, **characterized by** a median diameter, measured by diffraction of light by means of a laser granulometer, smaller than 2 µm, like the aqueous phase of a secondary bitumen emulsion, **characterized by** a median diameter, measured by diffraction of light by means of a laser granulometer, larger than 2 µm, the thereby obtained final emulsion being **characterized by** a bitumen content from 50% to 95% by mass, an STV (Standard Tar Viscometer) viscosity measured by the EN 12846 test, at 40°C through the 4 mm orifice, less than 300 s and a settling tendency as measured by the EN 12847 test, less than 10%, said method being **characterized in that** the secondary emulsion is made in a colloidal mill or a succession of static mixers.

2. The method according to claim 1, **characterized in that** the ratio of the median diameter of the secondary emulsion to that of the primary emulsion is larger than 2.

3. The method according to either of claims 1 to 2, **characterized in that** the median diameter of the primary emulsion is comprised between 0.2 µm and 2 µm excluded.

4. The method according to either of claims 1 to 3, **characterized in that** the median diameter of the secondary emulsion is comprised between 2 µm excluded and 20 µm.

5. The method according to either of claims 1 to 4, **characterized in that in that** the bitumen content from the primary emulsion is comprised between 5% and 95%.

6. The method according to either of claims 1 to 5, **characterized in that** the primary emulsion is obtained by phase inversion under laminar flow conditions and the secondary emulsion is obtained by a colloidal mill.

7. The method according to either of claims 1 to 6, **characterized in that** the bitumen used in the primary emulsion differs by the grade, the origin and/or the presence of additives from that used in the secondary emulsion.

8. The method according to either of claims 1 to 7, **characterized in that** the bitumen making up the primary emulsion is a bitumen modified by a polymer and that of the secondary emulsion does not contain any polymer.

9. The method according to claim 8, **characterized in that** the bitumen modified by a polymer making up the primary emulsion is obtained by adding from 0.5% to 30% relatively to the bitumen of elastomers selected from optionally cross-linked in situ, styrene and butadiene block or random copolymers, or copolymers of ethylene and vinyl acetate or of methyl or butyl acrylate, as well as mixtures thereof.

10. The method according to either of claims 1 to 9, **characterized in that** the emulsifier(s) used for making the primary emulsion is (are) used without any additional provision of emulsifier for making the secondary emulsion.

11. The method according to either of claims 1 to 9, **characterized in that** the emulsifier(s) used for making the primary emulsion is (are) different from the one (or those) used for making the secondary emulsion.

12. The method according to claim 1, **characterized in that** the ratio of the median diameter of the secondary emulsion to that of the primary emulsion is larger than 3.

13. The method according to either of claims 1 to 2, **characterized in that** the median diameter of the primary emulsion is comprised between 0.5 µm and 1.5 µm.

14. The method according to either of claims 1 to 3, **characterized in that** the median diameter of the secondary emulsion is comprised between 3 µm and 12 µm.

15. The method according to either of claims 1 to 4, **characterized in that in that** the bitumen content from the primary emulsion is comprised between 10% and 40% of the total bitumen.
